# FASCICULE DE BREVET EUROPEEN

(11) **EP 3 088 272 B1**
(45) Date de publication et mention de la délivrance du brevet: **25.11.2020**
(21) Numéro de dépôt: 16167088.0
(22) Date de dépôt: 26.04.2016
(51) Int. Cl.: B61B 12/00, B61B 12/06, G06K 9/00, G06K 9/62

(54) **PROCÉDÉ DE DÉTECTION DE POSITION DE GARDE-CORPS DE NACELLES DE TÉLÉSIÈGE PAR ANALYSE D'IMAGE**
ERFASSUNGSVERFAHREN DER POSITION DES SCHUTZGELÄNDERS DER GONDELN VON SESSELLIFTEN DURCH BILDANALYSE
METHOD FOR DETECTING THE POSITION OF GUARDRAILS IN A CHAIRLIFT THROUGH IMAGE ANALYSIS

(30) Priorité: 28.04.2015 FR 1553794
(43) Date de publication de la demande: 02.11.2016
(73) Titulaire: Bluecime, 38330 Montbonnot Saint Martin (FR)
(72) Inventeur: CUCCOLO, David, 73000 BARBERAZ (FR); CAMBONIE, Joel, 38190 LA COMBE DE LANCEY (FR); BULONE, Joseph, 38000 GRENOBLE (FR)
(74) Mandataire: de Jong, Jean Jacques

(56) Documents cités:
- WO-A1-2012/172198
- WO-A1-2013/182803
- HAUCK A ET AL: "Hierarchical recognition of articulated objects from single perspective views", COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17 juin 1997 (1997-06-17), pages 870-876, XP010237455, DOI: 10.1109/CVPR.1997.609430 ISBN: 978-0-8186-7822-6
- PAUWELS KARL ET AL: "Real-Time Model-Based Articulated Object Pose Detection and Tracking with Variable Rigidity Constraints", 2014 IEEE CONFERENCE ON COMPUTER VISION AND PATTERN RECOGNITION, IEEE, 23 juin 2014 (2014-06-23), pages 3994-4001, XP032649335, DOI: 10.1109/CVPR.2014.510

## Description

### Domaine technique

L'invention est relative aux télésièges et notamment à un système de détection de la position d'un garde-corps assurant la sécurité des passagers du télésiège.

### Arrière-plan

Dans une gare d'embarquement de télésiège, on souhaite assurer que les garde-corps soient abaissés à bref délai afin de garantir la sécurité des passagers sur l'ensemble du parcours. Généralement, la surveillance des garde-corps est assurée par du personnel présent en permanence dans la station d'embarquement.

Une détection automatisée de la position du garde-corps est ainsi souhaitée. Cependant, une telle détection présente des difficultés liées au fait que les nacelles sont dépourvues d'alimentation électrique.

La demande de brevet WO2012-172198 propose de détecter la position du garde-corps à l'aide d'une caméra reliée à un système de reconnaissance d'image. Plus spécifiquement, la caméra est installée pour capturer individuellement chaque nacelle de profil à sa sortie de la gare, à un emplacement où le garde-corps est censé avoir été abaissé. La nacelle est éclairée à contre-jour à l'aide d'une source de lumière infrarouge, et le système est configuré pour analyser la silhouette de la nacelle avec ses passagers, et reconnaître le contour du garde-corps abaissé.

Une telle solution peut présenter des défauts dans une situation réelle.

### Résumé

On prévoit de façon générale un procédé de détection de position d'un garde-corps sur une nacelle de télésiège selon la revendication 1.

Le procédé peut comprendre en outre les étapes définies dans la revendication 2.

Le procédé peut comprendre en outre les étapes consistant à créer un catalogue de masques de nacelle correspondant à des positions possibles d'une nacelle sur son parcours dans le champ de vision de la caméra ; opérer la reconnaissance de la nacelle courante dans une image courante en identifiant le masque le plus proche de l'image courante ; associer à chaque masque de nacelle un masque correspondant au garde-corps en configuration fermée ou ouverte ; et opérer la reconnaissance du garde-corps dans l'image courante dans la zone délimitée par le masque de garde-corps associé au masque de nacelle identifié.

Le procédé peut comprendre en outre les étapes consistant à estimer la vitesse de déplacement des nacelles ; et limiter le nombre de masques de nacelle pour la reconnaissance à un sous-ensemble de candidats probables compte tenu de la vitesse estimée et de la fréquence de prise de vue des images.

Le procédé peut comprendre en outre les étapes consistant à opérer la reconnaissance des nacelles en évaluant un critère basé sur des points d'intérêt calculés sur les masques de nacelle et les zones correspondantes de l'image courante ; et opérer la reconnaissance du garde-corps sur une transformée de détection de formes géométriques opérée sur l'image délimitée par le masque de garde-corps.

### Description sommaire des dessins

Des modes de réalisation seront exposés dans la description suivante, faite à titre non limitatif en relation avec les figures jointes parmi lesquelles :
- la figure 1 illustre un exemple d'image du champ de vision d'une caméra reliée à un système de détection de position de garde-corps selon l'invention ;
- la figure 2 illustre des images gabarit stockées dans un catalogue du système de détection ; et
- les figures 3A à 3C illustrent des étapes d'un exemple de mise en œuvre de détection de position de garde-corps.

### Description de modes de réalisation

Un système de détection de position de garde-corps de télésiège du type décrit dans la demande de brevet WO2012-172198 peut présenter certains défauts en pratique. Par exemple, le système est conçu pour déterminer l'angle de la partie arrière du garde-corps, qui dépasse de l'arrière de la nacelle. Cette partie arrière est en théorie libre de parasites visuels que peuvent provoquer les passagers.

En pratique, la nacelle passe rapidement dans le champ de vision de la caméra, juste après l'embarquement des passagers, de sorte que la nacelle oscille et que les passagers ne sont pas encore bien installés. Il existe une certaine probabilité pour que les passagers fassent dépasser leurs bras ou leurs bâtons de ski à l'arrière de la nacelle en cherchant à s'installer, durant le bref intervalle où la nacelle passe devant la caméra, provoquant une ambiguïté quant à la détection.

En outre, la caméra étant installée dans la gare d'embarquement, les passagers ont très peu de temps pour abaisser le garde-corps et atteindre une configuration stable au moment de passer devant la caméra. En règle générale, le garde-corps peut être abaissé un certain temps après que la nacelle a quitté la gare, sans que cela n'impacte la sécurité des passagers. Le système peut ainsi s'avérer trop contraignant pour les passagers.

On propose ci-après un système de détection de position de garde-corps basé sur la reconnaissance et le suivi en temps réel d'une nacelle balayant le champ de vision d'une caméra, sur une distance relativement longue permettant aux passagers d'adopter une position stable après l'embarquement et de lever des ambiguïtés transitoires sur la durée.

Pour suivre une nacelle sur une relativement longue distance dans un champ de vision restreint, il est préférable d'observer la nacelle de face ou de dos. Dans ces conditions, plusieurs nacelles consécutives se trouvent dans le champ de vision de la caméra. Il est alors préférable que ces nacelles soient observées dans une configuration où elles ne se chevauchent pas dans le champ de vision, c'est-à-dire que chaque nacelle soit observable intégralement. Chaque nacelle peut alors être reconnue et suivie individuellement par le système d'analyse.

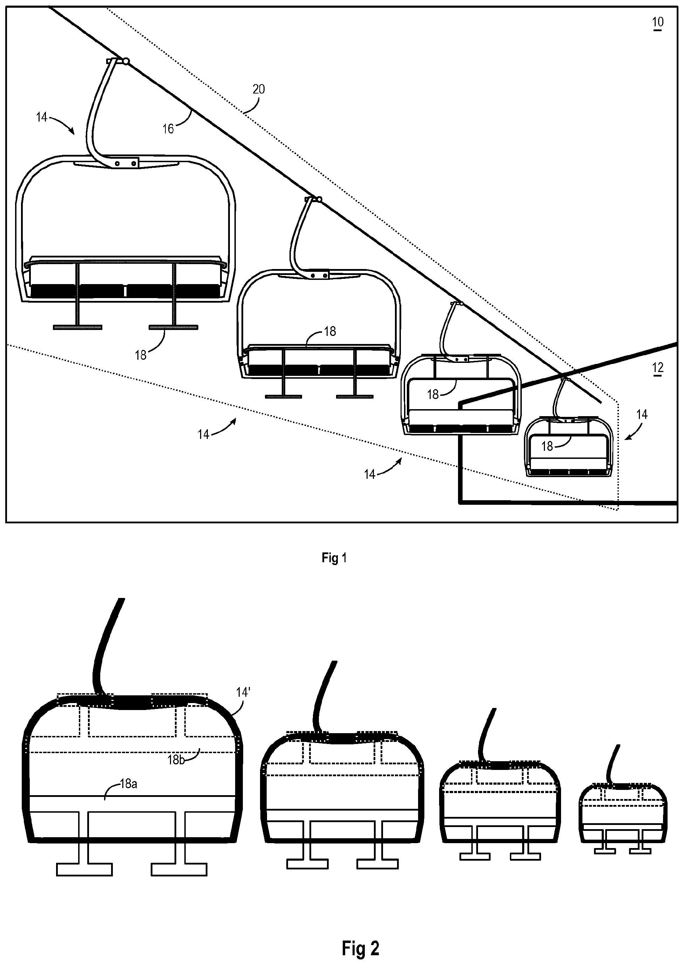

La figure 1 illustre un exemple de champ de vision 10 d'une caméra conforme à ces contraintes. La caméra peut être fixée sur le premier pylône à la sortie de la gare d'embarquement 12, et être orientée vers la gare 12 pour capturer dans son champ de vision simultanément plusieurs nacelles consécutives 14 sensiblement de face, et de manière que les nacelles ne se chevauchent pas.

A la figure 1, la caméra est orientée pour capturer quatre nacelles partant de la gare 12. Les deux nacelles au premier plan ont leur garde-corps 18 abaissé, et les deux nacelles à l'arrière-plan, qui viennent de sortir de la gare, ont leur garde-corps levé.

En plaçant la caméra sur le pylône, c'est-à-dire entre les nacelles partant de la gare et les nacelles retournant dans la gare, et en ajustant l'orientation, la hauteur, et éventuellement la focale de la caméra, on peut obtenir une vue intégrale de chaque nacelle sortante sur une partie de son parcours, comme cela est représenté.

La caméra produit un flot d'images du type de la figure 1, figeant les nacelles à des positions successives dans leur parcours. En principe, on souhaite, dans chaque image, reconnaître la nacelle du premier plan et déterminer la position de son garde-corps. Alors, si la nacelle se trouve au-delà d'une position d'avertissement et que son garde-corps n'est pas détecté en position abaissée, le système signale l'absence du garde-corps. Ce signalement, complété par une détection de présence de passagers, peut être utilisé pour émettre un signal d'alarme.

Il suffirait pour cela, en théorie, de n'analyser que la partie de l'image contenant la dernière nacelle. On se heurte alors, en pratique, comme dans le système de la demande de brevet WO2012-172198, à un manque de robustesse de la reconnaissance lié au fait que la fenêtre d'analyse est très courte et sujette à des parasites visuels fortuits pouvant fausser la reconnaissance.

La robustesse de la reconnaissance peut être améliorée en utilisant des critères multiples. Par exemple, au lieu de chercher seulement à reconnaître une nacelle avec le garde-corps abaissé, on peut chercher également à reconnaître une nacelle avec le garde-corps levé. Alors, l'absence de reconnaissance du garde-corps abaissé peut être confirmée par la reconnaissance du garde-corps levé, et inversement.

Le fait que le système d'analyse soit configuré pour suivre chaque nacelle pendant une durée relativement longue peut améliorer davantage la robustesse. En effet, on peut alors extrapoler des configurations de nacelle qui n'ont pas pu être reconnues du fait de parasites visuels transitoires. Pour cela, on peut exploiter l'historique de la configuration de la nacelle compte tenu que l'évolution la plus probable est que la nacelle démarre avec le garde-corps levé et termine avec le garde-corps abaissé.

Par exemple, le système reconnaîtra au début de la progression d'une nacelle la configuration garde-corps levé. A un moment donné, les passagers abaissent le garde-corps, mais le système ne parvient pas à reconnaître la position abaissée pour diverses raisons, par exemple car les passagers cachent la majorité du garde-corps avec leurs bras et jambes sur tout le reste de la progression dans le champ de vision de la caméra. Le système ne reconnaît plus la position levée, puisque le garde-corps est effectivement abaissé. Le système pourra confirmer que le garde-corps est abaissé, car il y a eu une évolution de configuration de la nacelle à partir de la configuration avec le garde-corps levé et que l'évolution la plus probable est vers l'abaissement du garde-corps. En fait la même confirmation peut être établie si la dernière configuration reconnue est celle avec le garde-corps abaissé.

Selon une première approche, si les ressources de calcul sont suffisantes, le système d'analyse peut être programmé pour mettre en œuvre une reconnaissance de forme complète sur chaque image, du type reconnaissance de visages, basée sur un apprentissage préalable de différentes configurations de nacelle avec le garde-corps abaissé et le garde-corps levé, et différentes configurations de passagers.

Pour diminuer les ressources de calcul, on peut limiter la zone d'analyse dans les images. Dans l'image de la figure 1, le déplacement des nacelles est limité à une zone trapézoïdale 20 dimensionnée pour tenir compte des oscillations du câble et des nacelles. Cette zone exclut des éléments du paysage et les nacelles retournant dans la gare qui pourraient parasiter l'analyse.

L'arrière-plan du télésiège étant en règle générale invariable, on pourra appliquer de façon efficace des techniques de soustraction de fond avant de procéder à la reconnaissance de forme.

Une nacelle présente généralement des caractéristiques constantes faciles à reconnaître et à suivre, ce qui n'est pas le cas du garde-corps, dont l'image peut être brouillée par la présence des bras et jambes des passagers.

Ainsi, on peut utiliser des techniques simples pour reconnaître les nacelles indépendamment de la position du garde-corps. Une fois qu'une nacelle est reconnue et située dans l'image, on peut situer les zones où le garde-corps peut être trouvé en position abaissée et en position levée. On peut alors appliquer dans ces zones restreintes des techniques de reconnaissance plus sophistiquées, par exemple basées sur un apprentissage.

La figure 2 illustre un exemple d'une série de masques de nacelle que l'on peut utiliser dans une technique simple de reconnaissance de nacelles. Ces masques forment un catalogue qui peut être stocké par le système de détection. On peut prévoir un masque par position distincte que la nacelle peut assumer dans l'image saisie par la caméra. Ainsi, en pratique, les masques peuvent être décalés selon un pas d'un pixel de la résolution de la caméra.

On a représenté des exemples de masques 14' correspondant aux quatre nacelles de l'image de la figure 1. Chaque masque peut être sous la forme d'une silhouette reproduisant un ensemble de caractéristiques remarquables des nacelles, comme des contours et des coins.

Le catalogue peut stocker en outre deux masques de garde-corps associés à chaque masque de nacelle, l'un 18a délimitant la zone dans laquelle peut se trouver le garde-corps abaissé, et l'autre 18b délimitant la zone dans laquelle peut se trouver le garde-corps levé.

Le catalogue peut être construit dans une phase de paramétrage, par exemple manuellement, pour tenir compte des spécificités de l'installation (configuration de la caméra, modèle de nacelle et de garde-corps).

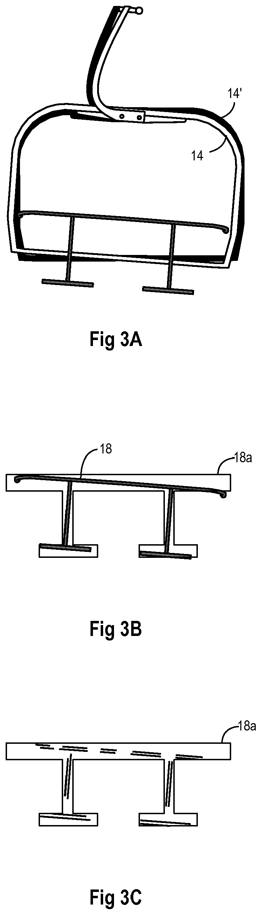

Les figures 3A à 3C illustrent des étapes mises en œuvre dans un exemple de phase opérationnelle de reconnaissance et de suivi de nacelles utilisant un catalogue de masques du type de la figure 2.

Le système d'analyse est conçu, dans cet exemple, pour accrocher et suivre chaque nouvelle nacelle apparaissant à la sortie de la gare 12 (figure 1), dans la partie de droite du trapèze 20. Par « accrochage » on peut entendre une première reconnaissance de nacelle opérée dans une zone probable d'apparition de la nacelle dans l'image. Par « suivi » on peut entendre la reconnaissance d'une nacelle dans un sous-ensemble de positions pouvant être atteintes par la nacelle depuis sa position reconnue dans l'image précédente. Une reconnaissance pour l'accrochage ou pour le suivi peut être effectuée en comparant un sous-ensemble de masques de nacelle candidats du catalogue à l'image courante. On utilisera ci-après également le terme « position » pour désigner un masque de nacelle, puisque chaque masque de nacelle correspond à une position possible de nacelle.

La figure 3A illustre cette opération de comparaison. Le catalogue contenant en principe des positions théoriques ou nominales, la nacelle en situation réelle est susceptible de présenter des variations par rapport à sa positions nominale - elle peut être plus haute ou plus basse du fait d'oscillations du câble ou de variations de charge, et elle peut être inclinée, comme cela est représenté, du fait d'oscillations ou de passagers mal répartis. Il n'est pas nécessaire que le catalogue contienne toutes les variations possibles autour des positions nominales. Les techniques de reconnaissance utilisées pouvant tolérer des variations, il suffit de trouver le candidat le « plus proche » dans le sous-ensemble défini. Si la similitude n'est pas satisfaisante, on pourra confirmer le candidat le plus proche en testant une série de transformations opérées sur le candidat, comme des translations verticales et éventuellement des rotations. Alternativement, pour éviter d'appliquer des transformations aux positions nominales stockées, le catalogue peut être complété par un ensemble de positions décalées et pivotées pour chaque position nominale.

Plus spécifiquement, une opération de comparaison peut être basée sur l'utilisation de points d'intérêt, par exemple selon la méthode de Harris. Des points d'intérêt sont alors calculés sur le masque de nacelle candidat et sur une zone correspondante de l'image courante. La zone de l'image servant au calcul déborde en règle générale des bords du masque candidat, puisque le calcul peut nécessiter un certain nombre de pixels de part et d'autre des contours.

Alors, le système sélectionne le candidat fournissant les points d'intérêt les « plus proches » de ceux de l'image courante selon un critère de proximité choisi, par exemple en minimisant la somme des distances absolues (critère SAD). Si la proximité n'est pas suffisante, c'est-à-dire si la somme minimale trouvée est supérieure à un seuil, on peut procéder à des transformations incrémentales du masque dans une certaine marge, et réévaluer la proximité pour chaque incrément. Si on parvient ainsi à rendre la proximité satisfaisante, la transformation est mémorisée pour l'appliquer également aux masques de garde-corps, utilisés plus loin. Dans le cas contraire, la reconnaissance échoue.

Dans la phase d'accrochage, le sous-ensemble de candidats correspond aux premières positions du catalogue, notamment toutes les positions pouvant être assumées par la nacelle dans l'intervalle séparant deux prises d'image par la caméra (typiquement 1/30 s).

Dans la phase de suivi, le sous-ensemble de candidats peut être déterminé à la suite d'une estimation de vitesse de déplacement, par exemple selon la méthode de Kalmann. Connaissant la vitesse de prise de vue des images et la vitesse de déplacement, on trouve la position probable de la nacelle d'une image courante à partir de sa position dans l'image précédente. Le sous-ensemble de candidats est formé de quelques positions autour de la position probable, avec une marge d'erreur correspondant à l'incertitude sur l'estimation de vitesse. Le nombre de candidats à évaluer est alors particulièrement faible, ce qui accélère l'opération de reconnaissance.

On peut alternativement définir un sous-ensemble de candidats en absence d'estimation de vitesse. On peut alors prendre toutes les positions entre la position trouvée dans l'image précédente et la position qui serait atteinte à la vitesse maximale du télésiège.

En cas d'échec de reconnaissance pendant la phase de suivi, lié par exemple à des oscillations trop importantes de la nacelle ou à des conditions de prise de vue aléatoires, on sait néanmoins que la nacelle est présente. Dans l'image suivante, une nouvelle tentative peut être faite à l'aide d'un sous-ensemble de positions défini à partir de la dernière position reconnue de la nacelle.

Une fois qu'on a reconnu une nacelle dans une image, on peut procéder à la reconnaissance du garde-corps à l'aide des deux masques de garde-corps définis dans le catalogue pour le candidat de nacelle retenu par la reconnaissance. Si une transformation a été appliquée au candidat pour la reconnaissance, cette transformation peut également être appliquée aux masques de garde-corps.

La reconnaissance du garde-corps peut en principe n'être effectuée que pour les dernières positions de la nacelle, à partir d'une position limite où le garde-corps est censé être abaissé. Cependant, comme on l'a précédemment indiqué, le procédé de détection peut être rendu plus robuste en observant l'évolution de la position du garde-corps sur le parcours de la nacelle.

La figure 3B illustre une première étape dans la reconnaissance du garde-corps, utilisant par exemple le masque de garde-corps abaissé 18a associé au candidat de nacelle retenu. Les mêmes opérations peuvent être réalisées avec le masque de garde-corps levé (18b).

On suppose que la proximité obtenue dans l'étape de reconnaissance de la figure 3A est satisfaisante, malgré que la nacelle de l'image soit légèrement inclinée. Le garde-corps 18 à reconnaître, ici en position abaissée, a subi la même inclinaison, mais le masque 18a est suffisamment étendu pour contenir malgré cela une partie significative de l'image du garde-corps.

La figure 3C illustre une autre étape dans la reconnaissance du garde-corps. Comme on l'a précédemment indiqué, l'image du garde-corps peut être brouillée de façon aléatoire par la présence des bras et des jambes des passagers, plus ou moins nombreux. On préfère alors utiliser des techniques de reconnaissance plus sophistiquées et plus robustes que celles employées pour la reconnaissance de nacelles.

On peut utiliser, dans la zone délimitée par le masque, une technique générique de reconnaissance de formes basée sur un apprentissage préalable, par exemple la méthode de Viola Jones. L'apprentissage peut être effectué sur un grand nombre d'images prises en situation, incluant un échantillon significatif de combinaisons possibles de configurations de passagers et de conditions météorologiques.

La technique de reconnaissance peut toutefois être simplifiée et rendue plus robuste en utilisant des caractéristiques remarquables du garde-corps. Le garde-corps présente des formes géométriques caractéristiques, notamment des contours droits horizontaux et verticaux. Ainsi, on peut appliquer sur l'image délimitée par le masque de garde-corps une extraction de contours, par exemple selon la méthode de Canny, et appliquer aux contours une détection de formes géométriques, par exemple une transformée de Hough qui isole les droites.

La figure 3C illustre un exemple d'image obtenue à l'aide d'une extraction de droites. Comme cela est représenté, les droites peuvent comporter des lacunes du fait que des parties du garde-corps sont masquées par les passagers, mais on parvient à reconnaître de façon globale la présence d'un garde-corps. Un système à apprentissage qu'on aura alimenté avec de nombreux échantillons d'images sous cette forme transformée aura également une telle capacité de reconnaissance « globale », et pourra être plus robuste qu'un système qu'on aurait alimenté avec des images brutes, puisque les images transformées ne contiennent que des formes caractéristiques. En outre, la base d'apprentissage sera moins volumineuse et demandera moins de ressources à l'exploitation, puisque les images sont monochromes et de faible complexité.

Dans ce qui précède, on a décrit le procédé de détection à l'aide d'une caméra observant les nacelles sensiblement de face. Alternativement, la caméra peut être fixée au niveau de la station d'embarquement pour observer les nacelles sensiblement de dos. Le garde-corps peut, de dos, également présenter des caractéristiques visuelles différentiables dans ses deux positions. En outre, l'image du garde-corps de dos est susceptible d'être moins parasitée par les passagers.

De nombreuses variantes et modification des modes de réalisation décrits ici apparaîtront à l'homme du métier. Des exemples particuliers de méthodes de calcul ont été cités pour les opérations de reconnaissance de formes, comme le calcul de points d'intérêt selon la méthode de Harris pour comparer les masques de nacelle à l'image courante. Des méthodes connues différentes peuvent aboutir à des résultats équivalents, comme le calcul de régions d'intérêt selon la méthode SURF.

## Revendications

1. Procédé de détection de position d'un garde-corps sur une nacelle de télésiège, comprenant les étapes suivantes :
• installer une caméra pour capturer dans son champ de vision (10) une nacelle sensiblement de face ou de dos, de sorte que la nacelle peut être suivie dans le champ de vision sur une distance relativement longue ;
• produire un flot d'images de la nacelle balayant le champ de vision par la caméra ;
• analyser les images produites par la caméra avec un système de reconnaissance de forme et de suivi comprenant les étapes suivantes :
• opérer une reconnaissance et un suivi de la nacelle (14) sans tenir compte de son garde-corps (18) ;
• associer à la nacelle une zone de présence (18a, 18b) du garde-corps ; et
• analyser la zone de présence pour déterminer la position du garde-corps.

2. Procédé selon la revendication 1, comprenant les étapes suivantes :
• installer la caméra pour capturer dans son champ de vision simultanément plusieurs nacelles consécutives, et de manière que les nacelles ne se chevauchent pas ;
• opérer une reconnaissance de chaque nacelle dans le champ de vision de la caméra et déterminer la position de son garde-corps (18) ; et
• en cas d'ambigüité sur la détermination de la position d'un garde-corps, utiliser les résultats d'analyse d'une image précédente.

3. Procédé selon la revendication 2, comprenant les étapes suivantes :
• créer un catalogue de masques de nacelle (14') correspondant à des positions possibles d'une nacelle sur son parcours dans le champ de vision de la caméra ;
• opérer la reconnaissance de la nacelle courante dans une image courante en identifiant le masque le plus proche de l'image courante ;
• associer à chaque masque de nacelle un masque (18a, 18b) correspondant au garde-corps en configuration fermée ou ouverte ; et
• opérer la reconnaissance du garde-corps dans l'image courante dans la zone délimitée par le masque de garde-corps associé au masque de nacelle identifié.

4. Procédé selon la revendication 3, comprenant les étapes suivantes :
• estimer la vitesse de déplacement des nacelles ; et
• limiter le nombre de masques de nacelle pour la reconnaissance à un sous-ensemble de candidats probables compte tenu de la vitesse estimée et de la fréquence de prise de vue des images.

5. Procédé selon la revendication 3, comprenant les étapes suivantes :
• opérer la reconnaissance des nacelles en évaluant un critère basé sur des points d'intérêt calculés sur les masques de nacelle et les zones correspondantes de l'image courante ; et
• opérer la reconnaissance du garde-corps sur une transformée de détection de formes géométriques opérée sur l'image délimitée par le masque de garde-corps.

## Patentansprüche

1. Verfahren zum Erfassen der Position eines Bügels an einer Sesselliftgondel, umfassend die folgenden Schritte:
• Installieren einer Kamera, um in ihrem Sichtfeld (10) eine Gondel im Wesentlichen von vorne oder hinten zu erfassen, so dass die Gondel in dem Sichtfeld über eine relativ lange Strecke verfolgt werden kann;
• Erzeugen eines Stromes von Bildern der Gondel, die das Sichtfeld durch die Kamera abtasten;
• Analysieren der von der Kamera erzeugten Bilder mit einem Formerkennungs- und Verfolgungssystem, umfassend die folgenden Schritte:
• Durchführen einer Erkennung und Verfolgung der Gondel (14), ohne ihren Bügel (18) dabei zu berücksichtigen;
• Verknüpfen eines Anwesenheitsbereichs (18a, 18b) des Bügels mit der Gondel; und
• Analysieren des Anwesenheitsbereichs zur Bestimmung der Position des Bügels.

2. Verfahren nach Anspruch 1, umfassend die folgenden Schritte:
• Installieren der Kamera, um in ihrem Sichtfeld mehrere aufeinanderfolgende Gondeln gleichzeitig zu erfassen, und zwar so, dass sich die Gondeln nicht überlagern;
• Durchführen einer Erkennung jeder Gondel im Sichtfeld der Kamera und Bestimmen der Position ihres Bügels (18); und
• im Falle von Unklarheiten bei der Bestimmung der Position eines Bügels, Verwenden der Analyseergebnisse eines früheren Bildes.

3. Verfahren nach Anspruch 2, umfassend die folgenden Schritte:
• Erstellen eines Katalogs von Gondelmasken (14'), die den möglichen Positionen einer Gondel auf ihrer Bahn im Sichtfeld der Kamera entsprechen;
• Durchführen der Erkennung der aktuellen Gondel in einem aktuellen Bild durch Identifizieren der Maske, die dem aktuellen Bild am nächsten liegt;
• Verknüpfen jeder Gondelmaske mit einer Maske (18a, 18b), die dem Bügel in geschlossener oder offener Konfiguration entspricht; und
• Durchführen der Erkennung des Bügels im aktuellen Bild in dem durch die Bügelmaske abgegrenzten Bereich, die mit der identifizierten Gondelmaske verknüpft ist.

4. Verfahren nach Anspruch 3, umfassend die folgenden Schritte:
• Schätzen der Fahrgeschwindigkeit der Gondeln; und
• Beschränken der Anzahl der Gondelmasken zur Erkennung auf eine Teilmenge wahrscheinlicher Kandidaten basierend auf der geschätzten Geschwindigkeit und der Bildaufnahmerate.

5. Verfahren nach Anspruch 3, umfassend die folgenden Schritte:
• Durchführen der Gondelerkennung durch Auswerten eines Kriteriums auf der Grundlage von Interessenspunkten, die anhand der Gondelmasken und der entsprechenden Bereiche des aktuellen Bildes berechnet wurden; und
• Durchführen der Bügelerkennung anhand einer geometrischen Formerkennungstransformation, die auf dem durch die Bügelmaske abgegrenzten Bild durchgeführt wird.

## Claims

1. Method for detecting the position of a guardrail on a chairlift gondola, comprising the following steps:
• installing a camera so that it captures a gondola in its field of vision (10) substantially from the front or the back, such that the gondola can be tracked in the field of vision over a relatively long distance;
• producing a flow of images of the gondola scanning the field of vision by the camera;
• analysing the images produced by the camera with a pattern recognition and tracking system according to the following steps:
• performing recognition and tracking of the gondola (14) without taking into account its guardrail (18);
• associating the gondola with a presence zone (18a, 18b) of the guardrail; and
• analysing the presence zone to determine the position of the guardrail.

2. The method according to claim 1, comprising the following steps:
• installing the camera so that it captures several consecutive gondolas simultaneously in its field of vision, and in such a way that the gondolas do not overlap;
• performing recognition of each gondola in the camera's field of vision and determining the position of its guardrail (18); and
• in case of ambiguity about the determination of the position of a guardrail, using the analysis results of a previous image.

3. The method according to claim 2, comprising the following steps:
• creating a catalogue of gondola masks (14') corresponding to possible positions of a gondola on its path in the camera's field of vision;
• performing recognition of the current gondola in a current image by identifying the mask closest to the current image;
• associating to each gondola mask a mask (18a, 18b) corresponding to the guardrail in closed or open configuration; and
• performing recognition of the guardrail in the current image in the zone delimited by the guardrail mask associated to the identified gondola mask.

4. The method according to claim 3, comprising the following steps:
• estimating the speed of travel of the gondolas; and
• limiting the number of gondola masks for recognition to a subset of likely candidates given the estimated speed and frame rate of the images.

5. The method according to claim 3, comprising the following steps:
• performing gondola recognition by evaluating a criterion based on points of interest calculated on the gondola masks and corresponding areas of the current image; and
• performing recognition of the guardrail on a geometric shape detection transform operated on the image delimited by the guardrail mask.
